# EUROPÄISCHE PATENTSCHRIFT

(11) **EP 3 392 624 B1**
(45) Veröffentlichungstag und Bekanntmachung des Hinweises auf die Patenterteilung: **12.02.2020**
(21) Anmeldenummer: 17166957.5
(22) Anmeldetag: 18.04.2017
(51) Int. Cl.: G01F 23/00, G01F 23/26, G01F 23/284, G01F 25/00

(54) **FÜLLSTANDMESSVORRICHTUNG ZUM MESSEN DES FÜLLSTANDS IN EINEM BEHÄLTNIS MIT EINEM STRAFFGEWICHT**
LEVEL MEASUREMENT DEVICE FOR MEASURING THE FILL LEVEL IN A CONTAINER WITH A TENSIONING WEIGHT
JAUGE DE NIVEAU DESTINÉE À MESURER LE NIVEAU DE REMPLISSAGE D'UN RÉCIPIENT COMPRENANT UN POIDS TENSEUR

(43) Veröffentlichungstag der Anmeldung: 24.10.2018
(73) Patentinhaber: VEGA Grieshaber KG, 77709 Wolfach (DE)
(72) Erfinder: Hengstler, Clemens, 77716 Haslach (DE)
(74) Vertreter: Patentanwälte Bauer Vorberg Kayser

(56) Entgegenhaltungen:
- EP-A1- 0 849 570
- WO-A1-2004/042333
- DE-A1- 2 401 486
- DE-A1- 4 224 635
- DE-A1- 10 330 305

## Beschreibung

Die vorliegende Erfindung betrifft eine Füllstandmessvorrichtung zum Messen des Füllstands in einem Behältnis.

Bei Füllstandmessungen wird die Füllhöhe eines Mediums, beispielsweise einer Flüssigkeit oder eines Schüttguts oder Trennschichten in Flüssigkeiten in einem Behältnis wie einem Tank oder einem Silo erfasst und in ein elektronisches Füllstandsignal umgewandelt. Insbesondere dann, wenn der Füllstand zur Steuerung oder Regelung eines Prozesses eingesetzt werden soll, bieten sich kontinuierliche Füllstandmessungen an. Das Füllstandsignal wird in eine Prozesssteuerung oder ein Leitsystem eingebunden.

Füllstandmessvorrichtung weisen üblicherweise ein Gehäuse auf, in welchem eine Sensorelektronik und ein mit der Sensorelektronik zusammenwirkender Füllstandsensor angeordnet sind. Um das Gehäuse am Behältnis befestigen zu können, umfasst die Füllstandmessvorrichtung weiterhin einen mit dem Gehäuse verbundenen Prozessanschluss.

Bei der kontinuierlichen Füllstandmessung kann beispielsweise ein geführtes Radar eingesetzt werden, bei welcher Radarimpulse entlang eines vom oberen Rand in das Behältnis hineinragenden Seils geführt werden. Das Seil ist mit dem Prozessanschluss verbunden und sorgt dafür, dass die Radarimpulse ungestört bis zum Füllgut gelangt. Das Seil muss dabei nicht direkt mit dem Prozessanschluss verbunden sein, sondern kann indirekt beispielsweise unter Verwendung eines Stabs mit dem Prozessanschluss verbunden sein.

Die kontinuierliche Füllstandmessung kann alternativ auch kapazitiv durchgeführt werden. Bei der kapazitiven Füllstandmessung bilden der kapazitive Füllstandsensor und das Behältnis die beiden Elektroden eines Kondensators. Eine durch Füllstandänderung hervorgerufene Kapazitätsänderung wird in ein Füllstandsignal umgewandelt. Das Seil ist in diesem Fall Teil des kapazitiven Füllstandsensors.

Das Seil ist an seinem ersten Ende am Prozessanschluss befestigt. Von dort aus wird das Seil in das Behältnis eingebracht. Bei beiden Messverfahren hängt die Genauigkeit des Messergebnisses unter anderem davon ab, wie straff das Seil vom oberen Rand in das Behältnis hineinragt. Je weiter sich das Seil einem linienförmigen Verlauf annähert, desto genauer sind die Messergebnisse. Daher werden sogenannte Straffgewichte eingesetzt, die am zweiten Ende des Seils befestigt werden. Das Straffgewicht weist einen Grundkörper mit einer Bohrung auf, in welche das Seil eingeführt wird. Mittels einer Befestigungseinrichtung wird das Seil am Grundkörper befestigt. Die Befestigungseinrichtung kann beispielsweise senkrecht zur Bohrung verlaufende und in der Bohrung endende Gewindebohrungen aufweisen, in welche eine Schraube oder ein Gewindestift einschraubbar ist. Die Schrauben oder die Gewindestifte pressen das Seil gegen die Wandung der Bohrung und erzeugen einen Reibschluss zwischen dem Seil und dem Grundkörper.

Die Bohrung, in welche das Seil eingebracht wird, ist in vielen Fällen als Sacklochbohrung ausgestaltet. Das Seil wird soweit in die Bohrung eingeführt, bis dass das Seil am Grund der Sacklochbohrung anschlägt. Wenn die Bohrung als Durchgangsbohrungen ausgestaltet ist, wird das Seil nur soweit in die Bohrung eingeführt, dass sie am dem Prozessanschluss abgewandten Ende bündig abschließt und nicht aus der Bohrung herausragt, da der Verlauf des aus der Bohrung herausragenden Teils des Seils nicht mehr kontrolliert werden kann. Bei geführtem Radar ist eine Füllstandmessung vom Prozessanschluss gesehen hinter dem Straffgewicht nicht möglich, bei einer kapazitiven Füllstandmessung nur mit sehr großem Aufwand.

Um eine umfassende Füllstandmessung im gesamten Behältnis durchführen zu können, muss die Länge des Seils auf die Höhe des Behältnisses angepasst werden. In einigen Fällen ist die Länge des Seils so bemessen, dass das Straffgewicht gerade nicht auf dem Boden des Behältnisses aufsetzt. Insofern ist eine relativ genaue Kenntnis der Höhe der Behältnisse erforderlich, um die Länge des Seils entsprechend wählen zu können.

Will man Füllstandmessvorrichtung für ein anderes Behältnis mit einer anderen Höhe verwenden, oder weicht das Behältnis von der geplanten oder bestellten Geometrie ab, ergibt sich folgende Situation: Da das Seil entweder am Grund der Sacklochbohrung anliegt oder mit dem dem Prozessanschluss abgewandten Ende der Durchgangsbohrung bündig abschließt, kann eine Anpassung an andere Behältnisse mit anderen Höhen nur dadurch erfolgen, dass das Seil gekürzt wird. Dies wiederum hat zur Folge, dass das Seil nur dann für ein anderes Behältnis verwendet werden kann, wenn das andere Behältnis eine geringere Höhe als das Behältnis aufweist, für welches das Seil zunächst verwendet worden ist. Will man die Füllstandmessvorrichtung für ein Behältnis mit einer größeren Höhe verwenden, muss ein neues Seil verwendet werden. Hierdurch wird die Flexibilität des Einsatzes einer derartigen Füllstandmessvorrichtung begrenzt. Da das Seil üblicherweise aus einem sehr hochwertigen Draht besteht, sind für das Kürzen spezielle Werkzeuge notwendig, wodurch das Kürzen relativ aufwendig ist. Da sich die Litzen von Drahtseilen beim Kürzen häufig entflechten, besteht für denjenigen, der die Kürzung durchführt, eine Verletzungsgefahr.

Bekannt sind auch aus DE 103 30 305 A1 Vorrichtungen zum lösbaren Verbinden eines Maßbandes mit einem Spanngewicht, bei denen Maßband und Spangewicht weitgehend spielfrei miteinander verbunden und manuell voneinander lösbar ausgebildet sind.

Aufgabe der vorliegenden Erfindung ist es, eine Füllstandmessvorrichtung zu schaffen, mit der die Anpassung an Behältnisse mit unterschiedlichen Höhen auf einfache Weise möglich ist.

Diese Aufgabe wird mit den in dem Anspruch 1 angegebenen Merkmalen gelöst. Vorteilhafte Ausführungsformen sind Gegenstand der Unteransprüche.

Eine Ausführungsform der Erfindung betrifft eine Füllstandmessvorrichtung zum Messen des Füllstands in einem Behältnis, wobei die Füllstandmessvorrichtung ein Gehäuse, in welchem eine Sensorelektronik und ein mit der Sensorelektronik zusammenwirkender Füllstandsensor angeordnet sind, einen mit dem Gehäuse verbundenen Prozessanschluss, und ein Seil mit einem ersten Ende und einem zweiten Ende umfasst, wobei das Seil im Bereich des ersten Endes am Prozessanschluss und in einem Befestigungsabschnitt mit einem Straffgewicht verbunden ist. Das Gehäuse kann auch gegenüber dem Prozessanschluss abgesetzt sein, so dass die Sensorelektronik über ein Kabel mit dem Füllstandsensor zusammenwirkt. Die Füllstandmessung beginnt am Prozessanschluss.

Das Straffgewicht weist eine Befestigungseinrichtung, welche zumindest in einem über die Länge des Seils wählbaren und dem Seil zugeordneten Befestigungsabschnitt mit dem Seil zusammenwirkt, um das Straffgewicht am Seil zu befestigen, und einen Aufnahmeabschnitt zum Aufnehmen des vom Befestigungsabschnitt und dem zweiten Ende begrenzten Teils des Seils auf. Solche Füllstandmessvorrichtungen sind beispielweise aus EP 0 849 570 A1 oder DE 24 01 486 A1 bekannt.

Erfindungsgemäß kann das Seil nahezu vollständig im Aufnahmeabschnitt aufgenommen werden kann und die Befestigungseinrichtung gelockert werden, so dass das Seil aus dem Aufnahmeabschnitt soweit herausgezogen werden kann, bis ein gewünschter Abstand zwischen dem Straffgewicht und dem Prozessanschluss vorliegt.

Das Seil ist einerseits mechanisch entweder direkt oder indirekt, beispielsweise mittels eines Stabs, am Prozessanschluss befestigt und elektrisch mittels entsprechender Leitungen mit der Sensorelektronik verbunden.

Vorschlagsgemäß ist das Straffgewicht mit einem Aufnahmeabschnitt ausgestattet, mit welchem der Teil oder Abschnitt des Seils, der sich zwischen dem Befestigungsabschnitt und dem zweiten Ende befindet, in kontrollierter Weise aufgenommen werden kann. Dieser Teil des Seils beeinflusst die Messergebnisse nicht, wenn er im Aufnahmeabschnitt aufgenommen ist. Weiterhin ist die Befestigungseinrichtung so eingerichtet, dass der Befestigungsabschnitt, also der Abschnitt, an welchem die Befestigungseinrichtung mit dem Seil zum Befestigen des Seils am Straffgewicht zusammenwirkt, über die Länge des Seils frei wählbar ist. Der Aufnahmeabschnitt ist dabei insbesondere so ausgestaltet, dass er das gesamte Seil aufnehmen kann. Bei sehr großen Behältnissen mit großer Höhe kann das Seil aber so lang werden, dass es nicht vollständig vom Aufnahmeabschnitt aufgenommen werden kann. Aber auch mit einem nicht vollständig aufgenommenen Seil ergeben sich bereits Vorteile.

Der Abstand zwischen dem Straffgewicht und dem Prozessanschluss kann über die Länge des Seils frei gewählt werden. Der Abstand kann sowohl vergrößert als auch verkleinert werden. Folglich ermöglicht es das vorschlagsgemäße Straffgewicht, die Füllstandmessvorrichtung für Behältnisse mit unterschiedlichen Höhen zu verwenden, unabhängig davon, ob die Höhen größer oder geringer sind als die Höhe des Behältnisses, für welche die Füllstandmessvorrichtung zunächst verwendet wurde. Zudem kann die Anpassung an die verschiedenen Höhen des Behältnisses ohne Kürzen des Seils erfolgen, so dass kein entsprechendes Werkzeug benötigt wird. Die mit dem Kürzen verbundene Verletzungsgefahr durch sich entflechtende Litzen des Drahtseils besteht nicht.

Aus logistischer Sicht ergeben sich weitere Vorteile: Bei den bislang verwendeten Straffgewichten muss die Höhe des Behältnisses bei der Bestellung der Füllstandmessvorrichtung angegeben werden, um die Füllstandmessvorrichtung mit einem Seil auszustatten, dessen Länge in etwa der Höhe des Behältnisses entspricht. Folglich muss die entsprechende Niederlassung oder der Händler eine entsprechende Anzahl von Seilen mit gängigen Längen vorhalten oder jedes Mal kundenspezifisch ablängen. Mit dem vorschlagsgemäßen Straffgewicht kann die Länge sämtlicher Seile so gewählt werden, dass sie mindestens so lang sind die die Höhe der höchsten bekannten Behältnisse. Folglich reicht eine Seillänge oder eine geringe Anzahl von vorkonfektionierten Seilen aus, so dass zwischen den verschiedenen Seillängen nicht mehr unterschieden braucht, was die Logistik und die Lagerhaltung deutlich vereinfacht.

Vorteile bietet ein solches Straffgewicht auch bei der Verpackung und dem Versand. Da das Seil vollständig im Aufnahmeabschnitt des Straffgewichts aufgerollt werden kann, lässt sich das nötige Verpackungsvolumen auf ein Minimum reduzieren. Die Packmaße werden geringer. Zusätzlich vereinfacht sich auch das Handling in der Produktion. Ein Kompakter Füllstandsensor ist einfacher zu handeln als Füllstandsensoren mit einem Seil.

Erfindungsgemäß weist das Straffgewicht einen Grundkörper auf, der einen Hohlraum umschließt, wobei Aufnahmeabschnitt vom Hohlraum gebildet wird. Der Teil des Seils, welcher sich zwischen der Befestigungseinrichtung und dem zweiten Ende befindet, wird vollständig in den Hohlraum eingebracht, so dass er vom Grundkörper umgeben ist und von ihm abgeschirmt wird. Folglich beeinflusst dieser Teil des Seils die Messergebnisse nicht. Weiterhin kann der Grundkörper so ausgestaltet sein, dass er das Seil ausreichend stark belastet, so dass der Teil des Seils, der zwischen dem Straffgewicht und dem Prozessanschluss verläuft, weitgehend linienförmig verläuft. Wie eingangs erwähnt, werden die Seile derartiger Füllstandmessvorrichtungen aus hochwertigem Draht gefertigt. Da Drahtseile beim Transport und für die Lagerung üblicherweise auf Trommeln aufgerollt werden, können sie einen Drall aufweisen, der bei zu geringer Belastung zu einem spiralförmigen Verlauf des Seils führt. Der Grundkörper kann mit einer ausreichend hohen Masse versehen werden, dass das Seil trotz Dralls linienförmig oder nahezu linienförmig verläuft.

In einer weitergebildeten Ausführungsform kann der Grundkörper einen Deckel umfassen, mit welchem der Hohlraum geöffnet und geschlossen werden kann. Der Deckel vereinfacht den Zugang zum Hohlraum, so dass die Handhabung des Straffgewichts vereinfacht wird. Insbesondere die Anpassung des Abstands zwischen dem Prozessanschluss und dem Straffgewicht wird hierdurch vereinfacht.

Bei einer weitergebildeten Ausführungsform kann der Hohlraum einen kreisförmigen oder elliptischen Querschnitt aufweisen. Wenn der Abstand zwischen dem Prozessanschluss und dem Straffgewicht verringert werden soll, wird das Seil in den Hohlraum hineingeschoben. Der kreisförmige oder elliptische Querschnitt des Hohlraums verhindert, dass das Seil senkrecht oder mit spitzem Winkel auf eine Fläche des Hohlraums auftrifft und beim Hineinschieben geknickt wird. Der kreisförmige oder elliptische Querschnitt bewirkt, dass das Seil knickfrei aufgerollt wird. Beschädigungen, die zu einem Reißen des Seils führen können, werden hierdurch vermieden.

Bei einer weiteren Ausführungsform kann der Grundkörper eine Anzahl von in den Hohlraum mündende Durchgangsöffnungen aufweisen. Wie eingangs erwähnt, werden die Füllstandmessvorrichtungen in vielen Fällen zum Bestimmen des Füllstands von Flüssigkeiten eingesetzt. Die Durchgangsöffnungen ermöglichen das Eindringen der Flüssigkeit in den Hohlraum, wodurch die Bildung von Luftblasen verhindert wird. Die Luftblasen können dazu führen, dass das Straffgewicht nicht in die Flüssigkeit eintaucht sondern aufschwimmt oder in einer Zwischenposition verbleibt, in welcher das Seil nicht gestrafft wird, wodurch keine Füllstandmessung möglich ist. Zudem kann sich die Flüssigkeit in ausreichendem Maße austauschen, so dass die Flüssigkeit im Hohlraum derjenigen im Rest des Behältnisses entspricht. Wenn der Austausch nicht in ausreichendem Maße gewährleistet ist, kann es bei bestimmten Prozessen dazu kommen, dass die Flüssigkeit im Hohlraum andere Eigenschaften hat als diejenige im übrigen Behältnis, was sich negativ auf das Endergebnis des Prozesses auswirken kann.

Wenn die Füllstandmessvorrichtung in einem anderen Behältnis verwendet werden soll, wo ein anderer Prozess ausgeführt wird, fördern die Durchgangsöffnungen das Entleeren des Hohlraums, so dass keine Flüssigkeit vom einen in den anderen Prozess überführt wird. Hierdurch wird eine Kontamination verhindert.

Eine weitergebildete Ausführungsform zeichnet sich dadurch aus, dass die Befestigungseinrichtung einen in den Aufnahmeabschnitt mündenden Kanal, durch welchen das Seil durchführbar ist, und eine Anzahl von in den Kanal einbringbare Klemmelemente umfasst, die mit dem Befestigungsabschnitt zum Befestigen des Seils am Straffgewicht zusammenwirkt. In dieser Ausführungsform der Befestigungseinrichtung lässt sich der Abstand zwischen dem Straffgewicht und dem Prozessanschluss auf einfache Weise verändern. Die Klemmelemente können so ausgebildet werden, dass sie von Hand betätigt werden können, so dass die Anpassung des Abstands zwischen dem Straffgewicht und dem Prozessanschluss ohne Werkzeug erfolgen kann. Der Aufbau der Befestigungseinrichtung ist in dieser Ausführungsform sehr einfach, so dass die Herstellungskosten gering gehalten werden können.

Nach Maßgabe einer weiteren Ausführungsform sind die Klemmelemente als Gewindestifte oder als Schrauben ausgeführt. Gewindestifte und Schrauben sind Massenartikel, so dass sie kostengünstig zu beziehen sind. Zudem sind sie mit gängigen Werkzeugen wie Schraubenziehern oder Schraubschlüsseln einfach zu bedienen. Die Schrauben können auch als Rändelschrauben ausgebildet sein, so dass sie von Hand ohne Werkzeug betätigt werden können, was das Anpassen des Abstands zwischen dem Straffgewicht und dem Prozessanschluss vereinfacht.

Zusammenfassend sei darauf hingewiesen, dass der Abstand zwischen dem Straffgewicht und dem Prozessanschluss über die Länge des Seils frei wählbar ist. Dies ermöglicht die Verwendung der Füllstandmessvorrichtung für Behältnisse mit unterschiedlicher Höhe, ohne dass das Seil hierzu mit einem geeigneten Werkzeug gekürzt werden muss. Dieselbe Füllstandmessvorrichtung kann ohne die Verwendung eines neuen Seils auch für Behältnisse verwendet werden, die eine größere Höhe aufweisen als das Behältnis, für welches die Füllstandmessvorrichtung zunächst verwendet worden ist.

Erfindungsgemäß ist im Bereich des zweiten Endes des Seils ein Stoppelement befestigbar ist, welches das Ausziehen des Seils aus dem Hohlraum verhindert. Wenn der Abstand zwischen dem Straffgewicht und dem Prozessanschluss vergrößert werden soll, wird das Seil aus dem Hohlraum herausgezogen. Da das sich im Hohlraum befindende zweite Ende des Seils von außen nicht sichtbar ist, kann das Seil unbeabsichtigt aus dem Hohlraum herausgezogen werden, so dass es anschließend wieder in den Hohlraum eingebracht werden muss, was relativ zeitaufwendig ist. Der Stopper verhindert das unbeabsichtigte Herausziehen des Seils aus dem Hohlraum.

Weiterhin kann es sein, dass die Befestigungseinrichtung das Seil nicht ausreichend mit dem Straffgewicht verklemmt. Dies kann beispielsweise infolge einer Relaxation der Klemmelemente oder eines nicht ausreichenden Anziehens der insbesondere als Schrauben oder Gewindestifte ausgebildeten Klemmelemente vorkommen. Wird die Füllstandmessvorrichtung aus dem Behältnis entfernt und das Seil angezogen, wird das Seil ebenfalls aus dem Hohlraum entfernt. In diesem Fall bleibt das Straffgewicht im Behältnis zurück, der mitunter schwer zugänglich ist, so dass das Straffgewicht nur mit hohem Aufwand aus dem Behältnis entfernt werden kann. Der Stopper verhindert eine derartige Situation.

Eine weitere Ausgestaltung ist dadurch gekennzeichnet, dass das Stoppelement als eine auf das zweite Ende aufschiebbare Crimphülse ausgebildet ist. Wie bereits erwähnt, ist das Seil üblicherweise als ein Drahtseil ausgebildet. An den freien Enden der Drahtseile neigen die Litzen dazu, sich zu entflechten. Die Crimphülsen verhindern das Entflechten und reduzieren die damit verbundene Verletzungsgefahr. In dieser Ausführungsform sind die Crimphülsen so ausgeführt, dass sie gleichzeitig als Stoppelement mit den zuvor beschriebenen Effekten fungieren, so dass keine zusätzlichen Stoppelemente verwendet werden müssen, was den Aufbau der Füllstandmessvorrichtung vereinfacht.

Mit dem vorschlagsgemäßen Straffgewicht ist eine einfache Inbetriebnahme der Füllstandmessvorrichtungen möglich. So kann der Füllstandsensor einen Taster besitzen, mit dem ein Abgleich auf die neue Sondenlänge bzw. dem neu eingestellten Abstand zwischen Prozessanschluss und Straffgewicht durchgeführt werden kann. Wird beispielsweise ein Füllstandsensor mit einem Seil, welches 3 m lang ist, und dem vorschlagsgemäßen Straffgewicht ausgeliefert, passt der Kunde die Länge an seine Anwendung an und drückt dann auf den beschriebenen Taster. Dadurch ermittelt der Füllstandsensor die aktuelle Distanz zwischen dem Prozessanschluss und dem Straffgewicht und verwendet dies von da an als Nullpunkt (0%) für die Füllstandmessung (z.B.: 4 mA bei einem 4 bis 20mA-Füllstandsensor). Der 100% Punkt (20mA) befindet sich am Prozessanschluss. So kann der Kunde einen derart aufgebauten Füllstandsensor einfach und universell an jede Anwendung anpassen. Er muss nur das Straffgewicht ausrichten und dann einen Taster drücken. Er braucht keine zusätzliche Anzeige oder Bediensoftware.

Bei einer weiteren Ausgestaltung kann der obere 100%-Punkt durch einen zweiten Taster abgleichbar sein.

Beispielhafte Ausführungsformen der Erfindung werden im Folgenden unter Bezugnahme auf die beigefügten Zeichnungen näher erläutert. Es zeigen
- Figur 1a): eine Füllstandmessvorrichtung mit einem Straffgewicht nach dem Stand der Technik, anhand einer prinzipiellen Darstellung,
- Figur 1b): eine vergrößerte Darstellung des in Figur 1a) definierten Ausschnitts X, anhand einer prinzipiellen Schnittdarstellung,
- Figur 2: ein erstes Ausführungsbeispiel eines erfindungsgemäßen Straffgewichts,
- Figur 3: ein zweites Ausführungsbeispiel eines erfindungsgemäßen Straffgewichts, jeweils anhand einer prinzipiellen Schnittdarstellung,
- Figuren 4a) - 4c): eine Füllstandmessvorrichtung mit einem erfindungsgemäßen Straffgewichts in verschiedenen Stellungen, jeweils anhand von prinzipiellen Darstellungen.

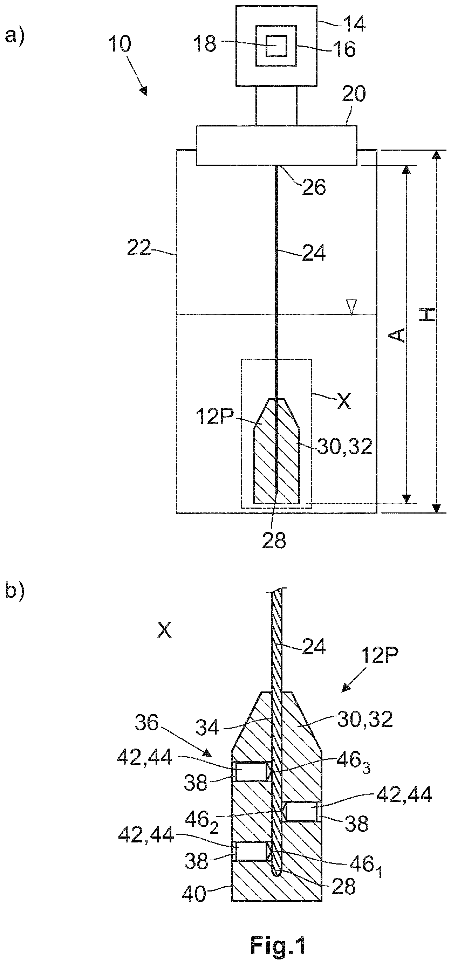

In Figur 1a) ist eine Füllstandmessvorrichtung 10 mit einem Straffgewicht 12P nach dem Stand der Technik anhand einer prinzipiellen Darstellung gezeigt. Die Füllstandmessvorrichtung 10 umfasst ein Gehäuse 14, in welchem eine Sensorelektronik 16 und ein Füllstandsensor 18 angeordnet sind. Darüber hinaus umfasst die Füllstandmessvorrichtung 10 einen Prozessanschluss 20, mit welchem das Gehäuse 14 an ein Behältnis 22 angeschlossen ist. Zudem umfasst die Füllstandmessvorrichtung 10 ein Seil 24, hier als ein Drahtseil ausgeführt, mit einem ersten Ende 26 und einem zweiten Ende 28. Mit seinem ersten Ende 26 ist das Seil 24 am Prozessanschluss 20 befestigt und kann dort auf nicht näher dargestellte Weise mit dem Füllstandsensor 18 zusammenwirken. Der Füllstandsensor 18 kann eine kontinuierliche Füllstandmessung oder Grenzstandmessung bezüglich der im Behältnis 22 befindlichen Medien durchführen, wozu eine kapazitive Füllstandmessung oder eine Füllstandmessung mittels geführten Radars eingesetzt werden kann.

Am zweiten Ende 28 ist das Seil 24 mit dem Straffgewicht 12P verbunden, welches in Figur 1b) vergrößert dargestellt ist. Das Straffgewicht 12P umfasst einen Grundkörper 32, der im Wesentlichen zylinderförmig ausgebildet ist und auf der zum Prozessanschluss 20 hinweisenden Seite konisch zuläuft. Im Straffgewicht 12P ist eine zentrisch verlaufende Sacklochbohrung 34 vorgesehen, in welche das Seil 24 eingebracht ist. Das Seil 24 ist soweit in die Sacklochbohrung 34 eingebracht, dass es am Grund der Sacklochbohrung 34 anschlägt.

Weiterhin weist das Straffgewicht 12P eine Befestigungseinrichtung 36 auf, welche drei senkrecht zur Sacklochbohrung 34 verlaufende Gewindebohrungen 38 umfasst, welche von einer äu-ßeren Oberfläche 40 des Straffgewichts 12P ausgehen und in der Sacklochbohrung 34 enden, diese also nicht kreuzen. Weiterhin umfasst die Befestigungseinrichtung 36 drei Klemmelemente 42, welche im dargestellten Beispiel als Gewindestifte 44 ausgebildet sind, die derart in die Gewindebohrungen 38 eingeschraubt sind, dass sie mit ihren konischen Enden am Seil 24 anliegen. Wenn die Gewindestifte 44 entsprechend weit in die Gewindebohrungen 38 eingeschraubt sind, pressen die Gewindestifte 44 das Seil 24 gegen die Mantelfläche der Sachlochbohrung 34, so dass dort ein Reibschluss mit dem Grundkörper 32 entsteht. Der Abschnitt oder Bereich des Seils 24, mit welchem die Klemmelemente 42 der Befestigungseinrichtung 36, in diesem Fall die Gewindestifte 44, mit dem Seil 24 und dem Grundkörper 32 zum Befestigen zusammenwirken, soll als Befestigungsabschnitt 46 bezeichnet werden. Insofern weist das in den Figuren 1a) und 1b) gezeigte Seil 24 insgesamt drei Befestigungsabschnitte 46₁ bis 46₃ auf. Aufgrund des Gewichts des Straffgewichts 12P wird das Seil 24 auf Zug belastet und dadurch gestrafft, so dass das Seil 24 auch dann linienförmig oder nahezu linienförmig verläuft, wenn es einen Drall aufweist.

Man erkennt, dass die Lage der Befestigungsabschnitte 46₁ bis 46₃ ausgehend vom zweiten Ende 28 des Seils 24 und unter der Voraussetzung, dass das Seil 24 bestimmungsgemäß am Grund der Sacklochbohrung 34 anschlägt, nicht frei wählbar ist. Das Behältnis 22 weist eine Höhe H auf (siehe Figur 1a)). Für einige Anwendungen ist der Abstand A zwischen dem Straffgewicht 12P und dem Prozessanschluss 20 so bemessen, dass das Straffgewicht 12P in geringem Abstand über dem Boden angeordnet ist, so dass es frei hängt und nicht auf dem Boden aufsetzt. Soll nun die Füllstandmessvorrichtung 10 für ein anderes Behältnis 22 verwendet werden, welches eine andere Höhe H aufweist, so kann der Abstand A zwischen dem Straffgewicht 12P und dem Prozessanschluss 20 nur durch Kürzen des Seils 24 verändert werden. Folglich kann die Füllstandmessvorrichtung 10 nur dann für andere Behältnisse 22 verwendet werden, wenn diese eine geringere Höhe H aufweisen. Eine Vergrößerung des Abstands A zwischen dem Straffgewicht 12P und dem Prozessanschluss 20 ist nicht möglich.

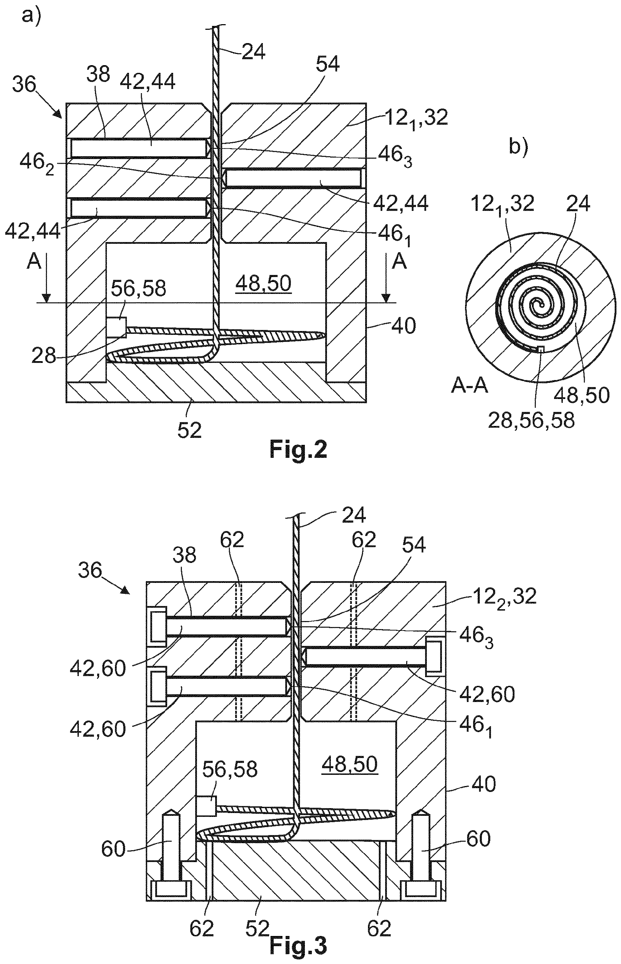

In Figur 2a) ist ein erstes Ausführungsbeispiel eines erfindungsgemäßen Straffgewichts 12₁ anhand einer prinzipiellen Schnittdarstellung gezeigt. Figur 2b) zeigt einen Schnitt durch das Straffgewicht 12₁ entlang der in Figur 2a) definierten Schnittebene A-A.

Wiederum umfasst das Straffgewicht 12₁ einen Grundkörper 32, der aber in diesem Fall einen als Hohlraum 48 ausgebildete Aufnahmeabschnitt 50 mit kreisförmigem Querschnitt (siehe Figur 2b)) umfasst. Der Hohlraum 48 ist mit einem Deckel 52 verschlossen, der beispielsweise mit einer nicht dargestellten Verschlusseinrichtung lösbar am Grundkörper 32 befestigt ist. Weiterhin weist der Grundkörper 32 einen Kanal 54 auf, welcher in den Aufnahmeabschnitt 50 mündet und durch welchen das Seil 24 durchgeführt ist.

Auch das erfindungsgemäße Straffgewicht 12₁ weist eine Befestigungseinrichtung 36 auf, welche in diesem Fall drei in den Kanal 54 einbringbare Klemmelemente 42 umfasst. Hierzu umfasst die Befestigungseinrichtung 36 drei Gewindebohrungen 38, die von der äußeren Oberfläche 40 des Straffgewichts 12₁ bzw. des Grundkörpers 32 ausgehen und die im Kanal 54 enden. Die Klemmelemente 42 sind in diesem Fall als Gewindestifte 44 ausgeführt, welche das Seil 24 gegen die gegenüberliegende Mantelfläche pressen und somit einen Reibschluss zwischen dem Seil 24 und dem Straffgewicht 12₁ erzeugen, wodurch das Straffgewicht 12₁ am Seil 24 befestigt wird.

Weiterhin ist ein Stoppelement 56 fest mit dem Seil 24 verbunden. Mit dem Stoppelement 56 wird verhindert, dass das Seil 24 unkontrolliert aus dem Hohlraum 48 herausgezogen werden kann. Hierzu ist das Stoppelement 56 größer ausgebildet als der Durchmesser des Kanals 54. Im dargestellten Beispiel ist das Stoppelement 56 als eine auf das zweite Ende 28 des Seils 24 aufgeschobene Crimphülse 58 ausgeführt, die zudem das Entflechten der Litzen des Seils 24 verhindert.

Der Aufnahmeabschnitt 50 kann den vom Befestigungsabschnitt 46₁ und dem zweiten Ende 28 begrenzten Teil des Seils 24 aufnehmen. Wie aus der Figur 2b) ersichtlich, schiebt sich das Seil 24 mit seinem zweiten Ende 28 und der dort befestigten Crimphülse 58 an der Mantelfläche des Hohlraums 48 entlang, wenn das Seil 24 in den Aufnahmeabschnitt 50 eingeschoben wird. Der kreisförmige Querschnitt bewirkt ein Aufrollen des Seils 24 im Hohlraum 48.

Soll die Füllstandmessvorrichtung 10 für ein anderes Behältnis 22 verwendet werden, welches eine geringere Höhe H aufweist als das Behältnis 22, für welches die Füllstandmessvorrichtung 10 zunächst verwendet worden ist, so werden die Gewindestifte 44 beispielsweise mit einem Inbusschlüssel etwas gelockert, so dass das Seil 24 im Kanal 54 verschoben werden kann. Um den Abstand A zwischen dem Prozessanschluss 20 und dem Straffgewicht 12₁ zu verringern, wird das Seil 24 solange in den Kanal 54 und folglich in den Hohlraum 48 hineingeschoben, bis dass der gewünschte Abstand A erreicht wird. Anschließend werden die Gewindestifte 44 wieder angezogen, so dass das Seil 24 nicht mehr im Kanal 54 verschoben werden kann.

Soll die Füllstandmessvorrichtung 10 für ein anderes Behältnis 22 verwendet werden, welches eine größere Höhe H aufweist als das Behältnis 22, für welches die Füllstandmessvorrichtung 10 zunächst verwendet worden ist, werden die Gewindestifte 44 etwas gelockert, so dass das Seil 24 im Kanal 54 verschoben werden kann. Um den Abstand A zwischen dem Prozessanschluss 20 und dem Straffgewicht 12₁ zu verlängern, wird das Seil 24 solange aus dem Kanal 54 und folglich aus dem Hohlraum 48 herausgezogen, bis dass der gewünschte Abstand A erreicht wird. Anschließend werden die Gewindestifte 44 wieder angezogen, so dass das Seil 24 nicht mehr im Kanal 54 verschoben werden kann.

Folglich ist es möglich, den Abstand A zwischen dem Prozessanschluss 20 und dem Straffgewicht 12₁ zu vergrößern oder zu verkleinern. Ein Durchtrennen des Seils 24 zum Kürzen ist nicht notwendig.

In Figur 3 ist ein zweites Ausführungsbeispiel des erfindungsgemäßen Straffgewichts 12₂ wiederum anhand einer prinzipiellen Schnittdarstellung gezeigt. Der Aufbau gleicht in weiten Teilen demjenigen des ersten Ausführungsbeispiels. In diesem Fall sind die Klemmelemente 42 der Befestigungseinrichtung 36 nicht als Gewindestifte 44, sondern als Schrauben 60 ausgeführt. Zudem ist der Deckel 52 ebenfalls mit Schrauben 60 am Grundkörper 32 befestigt. Die Schrauben 60 können die gleiche Größe aufweisen, so dass sowohl zum Lösen und Verklemmen des Seils 24 als auch zum Lösen und Befestigen des Deckels 52 derselbe Schraubenzieher oder Schraubenschlüssel verwendet werden kann. Alternativ können Rändelschrauben verwendet werden, so dass kein Werkzeug benötigt wird.

Darüber hinaus weist das Straffgewicht 12₂ insgesamt vier in den Hohlraum 48 mündende Durchgangsbohrungen 62 auf, von denen zwei im Grundkörper 32 und zwei im Deckel 52 angeordnet sind. Insbesondere dann, wenn der Füllstand einer Flüssigkeit im Behältnis 22 bestimmt werden soll, wird ein Eindringen und Austreten der Flüssigkeit in den und aus dem Hohlraum 48 gewährleistet.

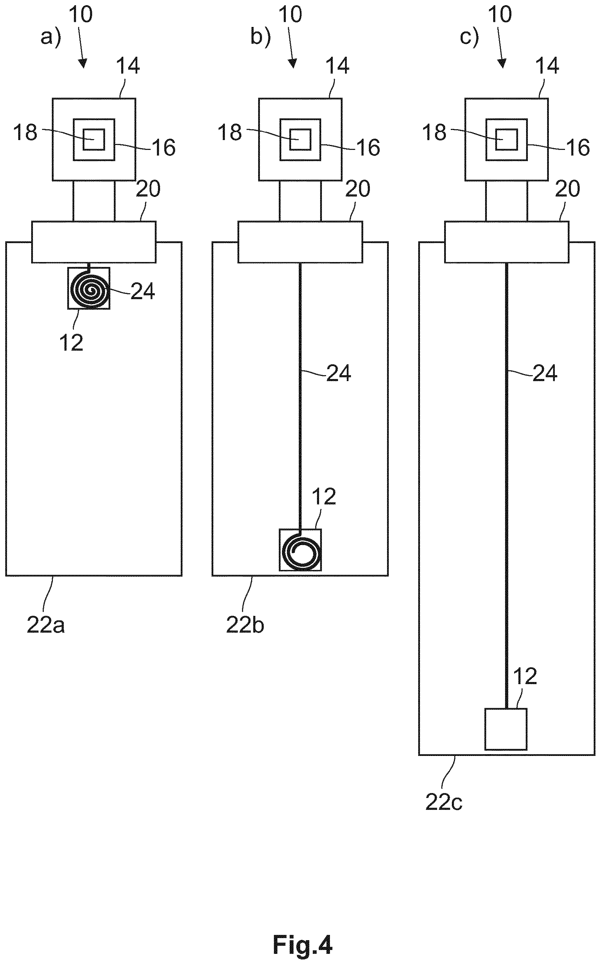

In den Figuren 4a) bis 4c) ist eine Füllstandmessvorrichtung 10 mit einem erfindungsgemäßen Straffgewichts 12 in verschiedenen Stellungen innerhalb der Behältnisse 22a, 22b, 22c gezeigt. In Figur 4a) ist das Seil 24 nahezu vollständig im Aufnahmeabschnitt 50 aufgenommen, wie es auch im Auslieferungszustand und während des Lagerns und beim Transport der Fall ist. Um das Straffgewicht 12 knapp über dem Boden des Behältnisses 22 zu positionieren, wird die Befestigungseinrichtung 36 gelockert, so dass das Seil 24 aus dem Aufnahmeabschnitt 50 herausgezogen werden kann. Das Seil 24 wird soweit aus dem Aufnahmeabschnitt 50 herausgezogen, bis dass der gewünschte Abstand A vorliegt. Anschließend wird die Befestigungseinrichtung 36 wieder angezogen.

Das in Figur 4c) gezeigte Behältnis 22c weist eine größere Höhe H auf als dasjenige, welches in den Figuren 4a) und 4b) dargestellt ist. Um die Füllstandmessvorrichtung 10 für dieses Behältnis 22c verwenden zu können, wird das Seil 24 vollständig aus dem Aufnahmeabschnitt 50 herausgezogen.

### Bezugszeichenliste

- 10: Füllstandmessvorrichtung
- 12, 12₁,-12₃: Straffgewicht
- 12P: Straffgewicht aus dem Stand der Technik
- 14: Gehäuse
- 16: Sensorelektronik
- 18: Füllstandsensor
- 20: Prozessanschluss
- 22, 22a - 22c: Behältnis
- 24: Seil
- 26: erstes Ende
- 28: zweites Ende
- 32: Grundkörper
- 34: Sacklochbohrung
- 36: Befestigungseinrichtung
- 38: Gewindebohrung
- 40: äußere Oberfläche
- 42: Klemmelement
- 44: Gewindestift
- 46, 46₁ - 46₃: Befestigungsabschnitt
- 48: Hohlraum
- 50: Aufnahmeabschnitt
- 52: Deckel
- 54: Kanal
- 56: Stoppelement
- 58: Crimphülse
- 60: Schrauben
- 62: Durchgangsbohrung

- A: Abstand
- H: Höhe

## Patentansprüche

1. Füllstandmessvorrichtung (10) zum Messen des Füllstands in einem Behältnis (22), wobei die Füllstandmessvorrichtung (10)
- ein Gehäuse (14), in welchem eine Sensorelektronik (16) und ein mit der Sensorelektronik (16) zusammenwirkender Füllstandsensor (18) angeordnet sind,
- einen mit dem Gehäuse (14) verbundenen Prozessanschluss (20), und
- ein Seil (24) mit einem ersten Ende (26) und einem zweiten Ende (28) umfasst, wobei das Seil (24) im Bereich des ersten Endes (26) am Prozessanschluss (20) und in einem Befestigungsabschnitt (46) mit einem Straffgewicht (12) verbunden ist, wobei das Straffgewicht (12)
- eine Befestigungseinrichtung (36) aufweist, welche zumindest in einem über die Länge des Seils (24) wählbaren und dem Seil (24) zugeordneten Befestigungsabschnitt (46) mit dem Seil (24) zusammenwirkt, um das Straffgewicht (12) am Seil (24) zu befestigen, **dadurch gekennzeichnet, dass** die Befestigungseinrichtung (36) ferner
- einen Aufnahmeabschnitt (50) zum Aufnehmen des vom Befestigungsabschnitt (46) und dem zweiten Ende (28) begrenzten Teils des Seils (24) aufweist,
wobei das Seil (24) nahezu vollständig im Aufnahmeabschnitt (50) aufgenommen werden kann und die Befestigungseinrichtung (36) gelockert werden kann, so dass das Seil (24) aus dem Aufnahmeabschnitt (50) soweit herausgezogen werden kann, bis ein gewünschter Abstand (A) zwischen dem Straffgewicht (12) und dem Prozessanschluss (20) vorliegt, wobei
das Straffgewicht (12) einen Grundkörper (32) aufweist, der einen Hohlraum (48) umschließt, wobei der Aufnahmeabschnitt (50) vom Hohlraum (48) gebildet wird und im Bereich des zweiten Endes (28) des Seils (24) ein Stoppelement (56) befestigbar ist, welches das Ausziehen des Seils (24) aus dem Hohlraum (48) verhindert.

2. Füllstandmessvorrichtung (10) nach Anspruch 1,
**dadurch gekennzeichnet, dass** der Grundkörper (32) einen Deckel (52) umfasst, mit welchem der Hohlraum (48) geöffnet und geschlossen werden kann.

3. Füllstandmessvorrichtung (10) nach einem der Ansprüche 1 oder 2,
**dadurch gekennzeichnet, dass** der Hohlraum (48) einen kreisförmigen oder elliptischen Querschnitt aufweist.

4. Füllstandmessvorrichtung (10) nach einem der Ansprüche 1 bis 3,
**dadurch gekennzeichnet, dass** der Grundkörper (32) eine Anzahl von in den Hohlraum (48) mündende Durchgangsöffnungen (62) aufweist.

5. Füllstandmessvorrichtung (10) nach einem der vorherigen Ansprüche,
**dadurch gekennzeichnet, dass** die Befestigungseinrichtung (36)
- einen in den Aufnahmeabschnitt (50) mündenden Kanal (54), durch welchen das Seil (24) durchführbar ist, und
- eine Anzahl von in den Kanal (54) einbringbare Klemmelemente (42) umfasst, die mit dem zumindest einen Befestigungsabschnitt (46) zum Befestigen des Seils (24) am Straffgewicht (12) zusammenwirkt.

6. Füllstandmessvorrichtung (10) nach Anspruch 5,
**dadurch gekennzeichnet, dass** die Klemmelemente (42) als Gewindestifte (44) oder als Schrauben (60) ausgeführt sind.

7. Füllstandmessvorrichtung (10) gemäß einem der vorhergehenden Ansprüche,
**dadurch gekennzeichnet, dass** das Stoppelement (56) als eine auf das zweite Ende (28) aufschiebbare Crimphülse (58) ausgebildet ist.

## Claims

1. A filling level measuring device (10) for measuring the filling level in a container (22), wherein the filling level measuring device (10) comprises
- a housing (14) in which a electronic sensor system (16) and a filling level sensor (18) cooperating with the electronic sensor system (16) are disposed,
- a process connection (20) connected to the housing (14), and
- a cable (24) with a first end (26) and a second end (28), wherein the cable (24), in the region of the first end (26), is connected to the process connection (20) and, in a fastening section (46), to a tensioning weight (12), wherein the tensioning weight (12)
- has a fastening device (36), which cooperates with the cable (24) at least in a fastening portion (46) that can be selected along the length of the cable (24) and is associated with the cable (24), in order to fasten the tensioning weight (12) to the cable (24),
**characterized in that** the fastening device (36) further has
- a receiving portion (50) for receiving the part of the cable (24) delimited by the fastening portion (46) and the second end (28),
wherein the cable (24) can be almost completely received in the receiving portion (50) and the fastening device (36) can be loosened, so that the cable (24) can be pulled out of the receiving portion (50) until a desired distance (A) is provided between the tensioning weight (12) and the process connection (20), wherein
the tensioning weight (12) has a basic body (32) enclosing a cavity (48), wherein the receiving portion (50) is formed by the cavity (48), and a stopper member (56), which prevents the extraction of the cable (24) from the cavity (48), can be attached in the region of the second end (28) of the cable (24).

2. The filling level measuring device (10) according to claim 1,
**characterized in that** the basic body (32) comprises a lid (52) with which the cavity (48) can be opened and closed.

3. The filling level measuring device (10) according to any one of the claims 1 or 2,
**characterized in that** the cavity (48) has a circular or elliptical cross section.

4. The filling level measuring device (10) according to any one of the claims 1 to 3,
**characterized in that** the basic body (32) has a number of through-holes (62) leading into the cavity (48).

5. The filling level measuring device (10) according to any one of the preceding claims,
**characterized in that** the fastening device (36) comprises
- a duct (54), which leads into the receiving portion (50) and through which the cable (24) can be fed,
- a number of clamping members (42) that can be inserted into the duct (54) and that cooperate with the at least one fastening portion (46) for fastening the cable (24) to the tensioning weight (12).

6. The filling level measuring device (10) according to claim 5,
**characterized in that** the clamping members (42) are configured as threaded pins (44) or as screws (60).

7. The filling level measuring device (10) according to any one of the preceding claims,
**characterized in that** the stopper member (56) is configured as a crimping sleeve (58) that can be pushed onto the second end (28).

## Revendications

1. Dispositif de mesure de niveau (10) destiné à mesurer le niveau dans un récipient (22), dans lequel ledit dispositif de mesure de niveau (10) comprend
- un boîtier (14) dans lequel sont disposés une électronique à capteur (16) et un capteur de niveau (18) agissant de concert avec ladite électronique à capteur (16),
- un raccord de processus (20) relié au boîtier (14), et
- un câble (24) ayant une première extrémité (26) et une deuxième extrémité (28), dans lequel ledit câble (24) est fixé, au niveau de la première extrémité (26), au raccord de processus (20) et est relié, dans une section de fixation (46), à un poids tenseur (12), dans lequel le poids tenseur (12) comprend
- un dispositif de fixation (36) qui agit de concert avec le câble (24), au moins dans une section de fixation (46) choisissable sur la longueur du câble (24) et associée au câble (24), afin de fixer le poids tenseur (12) au câble (24),
**caractérisé par le fait que** le dispositif de fixation (36) comprend en outre
- une section de réception (50) destinée à recevoir la partie du câble (24) qui est délimitée par la section de fixation (46) et la deuxième extrémité (28),
dans lequel le câble (24) peut être reçu presque complètement dans ladite section de réception (50) et que le dispositif de fixation (36) peut être desserré de sorte que le câble (24) peut être retiré de la section de réception (50) jusqu'à ce qu'une distance (A) souhaitée soit présente entre le poids tenseur (12) et le raccord de processus (20),
dans lequel le poids tenseur (12) présente un corps de base (32) qui entoure une cavité (48), dans lequel la section de réception (50) est formée par ladite cavité (48), et un élément d'arrêt (56) qui empêche que le câble (24) ne soit retiré de la cavité (48) est fixé au niveau de la deuxième extrémité (28) du câble (24).

2. Dispositif de mesure de niveau (10) selon la revendication 1, **caractérisé par le fait que** le corps de base (32) comprend un couvercle (52) par lequel la cavité (48) peut être ouverte et fermée.

3. Dispositif de mesure de niveau (10) selon l'une quelconque des revendications 1 ou 2, **caractérisé par le fait que** la cavité (48) présente une section transversale circulaire ou elliptique.

4. Dispositif de mesure de niveau (10) selon l'une quelconque des revendications 1 à 3, **caractérisé par le fait que** le corps de base (32) présente un nombre d'ouvertures traversantes (62) qui débouchent dans la cavité (48).

5. Dispositif de mesure de niveau (10) selon l'une quelconque des revendications précédentes, **caractérisé par le fait que** le dispositif de fixation (36) comprend
- un canal (54) qui débouche dans la section de réception (SO) et qui peut être traversé par le câble (24), et
- un nombre d'éléments de serrage (42) aptes à être insérés dans le canal (54), qui agit de concert avec ladite au moins une section de fixation (46) pour fixer le câble (24) au poids tenseur (12).

6. Dispositif de mesure de niveau (10) selon la revendication 5, **caractérisé par le fait que** lesdits éléments de serrage (42) sont réalisés en tant que broches filetées (44) ou comme vis (60).

7. Dispositif de mesure de niveau (10) selon l'une quelconque des revendications précédentes, **caractérisé par le fait que** ledit élément d'arrêt (56) est réalisé en tant que manchon de sertissage (58) qui peut être enfilé sur la deuxième extrémité (28).
